Europäisches Patentamt

(19) European Patent Office

Office européen des brevets

(11) Veröffentlichungsnummer: **0 168 521**
A1

(12) # EUROPÄISCHE PATENTANMELDUNG

(21) Anmeldenummer: **84111082.8**

(22) Anmeldetag: **17.09.84**

(51) Int. Cl.⁴: **B 62 D 13/02**, B 60 D 1/14

(30) Priorität: **18.07.84 DE 8421511 U**

(43) Veröffentlichungstag der Anmeldung: **22.01.86**
**Patentblatt 86/4**

(84) Benannte Vertragsstaaten: **BE DE LU NL**

(71) Anmelder: **Karl Kässbohrer Fahrzeugwerke GmbH,
Kässbohrerstrasse, D-7900 Ulm (Donau) (DE)**

(72) Erfinder: **Helmer, Bernd, Veilchenweg 38,
D-7910 Neu-Ulm/Pfuhl (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

(54) **Fahrzeugzug.**

㊐ Die Neuerung bezieht sich auf einen Fahrzeugzug mit einem wenigstens zweiachsigen Zugfahrzeug (1) und einem mit dem Heck desselben über eine Zuggabel (4) verbundenen, wenigstens zweiachsigen Anhänger (2), dessen Vorderachse ein Drehgestell (5) mit einer in Fahrtrichtung nach vorne gerichteten Zuggabel aufweist, die an einem Schieberahmen (8) angelenkt ist, der in Abhängigkeit vom Einschlagwinkel der Zuggabel gegenüber der Längsmittenachse des Anhängers verschiebbar im Drehgestell (15) angeordnet ist, wobei der Schieberahmen über einen Lenker (24) mit einem Kurbeltrieb verbunden ist, der mittels eines am Drehgestell gelagerten Ritzels (19) in einen am Anhängerchassis befestigten, zur Drehachse des Drehgestells koaxialen Zahnkranz (18) eingreift. Der Lenker (24) erstreckt sich bei in der Längsmittenachse des Anhängers befindlicher Zuggabel vom Ende des Kurbelarmes (23) nach rückwärts und ist an seinem freien Ende an einem sich ebenfalls nach rückwärts erstreckenden Übertragungshebel (25) angelenkt der seitensteif an einer rückwärtigen Traverse (12) des Schieberahmens (8) befestigt ist.

BESCHREIBUNG
————————————

Die Neuerung bezieht sich auf einen Fahrzeugzug mit einem wenigstens zweiachsigen Zugfahrzeug und einem mit dem Heck desselben über eine Zuggabel verbundenen, wenigstens zweiachsigen Anhänger, dessen Vorderachse ein Drehgestell mit einer in Fahrtrichtung nach vorne gerichteten Zuggabel aufweist, die an einem Schieberahmen angelenkt ist, der in Abhängigkeit vom Einschlagwinkel der Zuggabel gegenüber der Längsmittenachse des Anhängers verschiebbar im Drehgestell angeordnet ist, wobei der Schieberahmen über einen Lenker mit einem Kurbeltrieb verbunden ist, der mittels eines am Drehgestell gelagerten Ritzels in einen am Anhängerchassis befestigten, zur Drehachse des Drehgestells koaxialen Zahnkranz eingreift.

Derartige Anlenkungen sollen die Möglichkeit schaffen, relativ kurze Zuggabeln zu verwenden, um beim Fahren den Abstand zwischen Anhänger und Zugfahrzeug zu verringern. Man will dadurch einerseits größere Laderäume erreichen, andererseits möchte man die Wirbelbildung zwischen den Fahrzeugen vermindern.

Für Kurven- und Rangierfahrten ist es jetzt doch notwendig, die Fahrzeuge wieder auf Abstand zu bringen, um eine Kollision der Aufbauten zu verhindern. Der Schieberahmen schafft hierzu die Möglichkeit, weil er in Abhängigkeit vom Einschlagwinkel der Zuggabel von der Längsmittenachse des Anhängers ausgeschoben wird.

Ein Fahrzeugzug der eben genannten Art ist aus dem DE-GM 83 04 332 bekannt. Der Schieberahmen weist zwei seitliche Führungsholme auf, die im Drehgestell verschieblich gelagert sind. Sie sind im Bereich des Zugdeichsellagers über einen Träger miteinander verbunden. Der Lenker ist vom freien Ende des Kurbelarmes in Fahrtrichtung gesehen nach vorne gerichtet und an dem besagten Träger angelenkt.

Wird die Zuggabel aus ihrer Nullage in der Längsmittenachse des Anhängers, z. B. bei Kurvenfahrt, verschwenkt, so verändert das Ritzel seine Position relativ zum Zahnkranz und der Kurbelarm schwenkt aus seiner mittigen Lage auf der Längsmittenachse seitlich aus. Dabei wird der Anlenkpunkt des Lenkers am Kurbelarm in einer Kreisbewegung seitlich und in Fahrzeugrichtung gesehen nach vorne bewegt. Der Lenker überträgt diese Bewegung auf den Schieberahmen und schiebt ihn in die Abhängigkeit vom Einschlagwinkel nach vorne aus.

Nachteilig ist dabei, daß gerade bei Beginn der Einschlagbewegung der Zuggabel beim Schieberahmen ein relativ geringer Hub festzustellen ist.

Die vorliegende Neuerung hat die Aufgabe dem entgegenzutreten und gerade bei Beginn der Einschlagbewegung den Hub zu vergrößern. Diese Aufgabe wird neuerungsgemäß dadurch gelöst, daß der Lenker bei in der Längsmittenachse des Anhängers befindlicher Zuggabel vom Ende des Kurbelarmes sich nach rückwärts erstreckt und an seinem freien Ende an einem sich ebenfalls nach rückwärts erstreckenden Übertragungshebel angelenkt ist, der seitensteif an einer rückwärtigen Traverse des Schieberahmens befestigt ist.

Die neuerungsgemäße Anlenkung ist einfach aufgebaut und schafft trotz des einfachen Aufbaus überraschenderweise die Möglichkeit, besonders bei Beginn der Einschlagbewegung der Zuggabel den Ausschubweg schnell und wirksam zu vergrößern. Durch das Anordnen des Lenkers nach rückwärts wird gerade beim Beginn der Einschlagbewegung der Zuggabel das seitliche Auswandern des Kurbelarmes vorteilhaft zum Ausschieben des Schieberahmens verwendet. Es ergibt sich dabei überraschenderweise ein um bis zu 50% längerer Ausschubweg verglichen mit der gattungsgemäßen Anlenkung, bei der der Lenker vom Kurbelarm in Fahrtrichtung nach vorne gerichtet ist. Dieser längere Ausschiebeweg bei der neuerungsgemäßen Anlenkung ist höchst willkommen, weil auf diese Art und Weise der Abstand zwischen dem Zugfahrzeug und dem Anhänger bei normaler Geradeausfahrt noch weiter verringert werden kann. Dies ist gleichbedeutend mit mehr Raumgewinn beim Anhänger bzw. beim Zugfahrzeug und mit einer weiteren Verringerung des Abstandes zwischen den beiden Fahrzeugen bei Geradeausfahrt.

Die neuerungsgemäße Lösung ist deshalb so überraschend, weil sie trotz des einfachen mechanischen Aufbaus und der vermeintlich einfachen Anordnung gegenüber der gattungsgemäßen Konstruktion einen erheblichen Gewinn an Ausschubweg ermöglicht, ohne daß dies zunächst für den Fachmann erkennbar war.

Aus der DE-OS 32 35 546 ist eine gattungsfremde Anlenkung bekannt, bei der die Zuggabel an einem Schieberahmen angelenkt ist, der über ein Lenkergetriebe ein- und ausgefahren wird. Das Lenkergetriebe umfaßt einen in einer Schiebehülse am Drehgestell verschwenkbar gelagerten Hebel, der mit seinem einen Ende an einem Festpunkt am Anhängerchassis und mit seinem anderen Ende drehbeweglich über einen Lenker mit einer rückwärtigen Traverse des Schieberahmens verbunden ist. Der Hebel erstreckt sich bei in der Längsmittenachse befindlicher Zuggabel vom festen Anlenkpunkt nach rückwärts und fluchted dabei mit dem Lenker. Wird die Zuggabel ausgeschwenkt, so verdreht sich auch der Hebel zur Seite hin und zieht über den Lenker den Schieberahmen nach vorne. Während der Verschwenkbewegung des Hebels wird dieser auch relativ zur Schiebehülse verschoben, da er mit seinem einen Ende an dem Festpunkt des Anhängerchassis gehalten ist. Dies bedeutet, daß sich bei zunehmender Verschwenkung der Zuggabel der den Lenker führende Hebelarm des Hebels zunehmend verringert. Da der Hebel zudem im Inneren des Drehgestells angeordnet ist, ist die Schwenkbewegung der bekannten Anlenkung begrenzt. Beim Überschreiten eines Grenzeinschlagwinkels läuft der Hebel innerhalb des Drehgestells am Drehring an und die Zuggabel kann nicht weiterverschwenkt werden.

Die Verkürzung des Hebels bei seiner Verschwenkung ist nachteilig, da damit auch der Ausschiebeweg des Schieberahmens verkürzt wird. Um dem entgegenzutreten bestünde noch die theoretische Möglichkeit, den Abstand zwischen dem festen Lagerpunkt des Hebels und der Drehachse der Schiebehülse zu verkürzen. Verkürzt man diesen Abstand aber zu sehr, so können die Lagerkräfte nur noch schwer beherrscht werden und der Verschleiß steigt im unerwünschten Maße an. Zudem wird die Anlenkung wegen des stets auftretenden Spiels instabil. Das Anlaufen des Hebels innerhalb des Drehrings ist zudem beim Rangieren ungünstig, weil es dabei immer Fahrsituationen gibt, bei denen die Zuggabel unbeschränkt verschwenkt werden muß, soweit dies die Aufbauten beider Fahrzeuge erlauben. Dies ist aber bei der bekannten Anlenkung nicht möglich.

Die gattungsfremde Anlenkung vermittelt nicht die mit der neuerungsgemäßen Lösung erreichbaren Vorteile, obwohl auch bei dieser Lösung der Lenker sich vom Hebel aus nach rückwärts erstreckt. Bedingt durch die der bekannten Lösung anhaftenden Nachteile, wurde der Fachmann von der neuerungsgemäßen Lösung abgehalten.

Bei einer vorteilhaften Weiterbildung der Neuerung ist vorgesehen, daß der Lenker wenigstens gleich lang ist wie der Kurbelarm und maximal dessen dreifache Länge aufweist. Der Ausschubweg des Schieberahmens vergrößert sich zu Beginn der Einschlagbewegung der Zuggabel in dem Maße wie der Lenker kurzgehalten wird. Bei den eben angegebenen Größenverhältnissen wird bereits bei relativ geringem Einschlagwinkel ein relativ großer Hub des Schieberahmens erreicht. Das gleiche gilt für eine andere Weiterbildung der Neuerung, bei der vorgesehen ist, daß die Länge des Übertragungshebels kürzer ist als die doppelte Länge des Kurbelarms.

Eine einfache Ausbildung der Traverse ergibt sich dann, wenn der Übertragungshebel einstückig mit der Traverse ist.

Um dem Ausschubweg des Schieberahmens nicht durch die Traverse zu beschränken ist es günstig, wenn sie mit dem freien rückwärtigen Ende des Schieberahmens verbunden ist.

Ein Ausführungsbeispiel der Erfindung ist nachfolgend anhand einer Zeichnung beschrieben.

Es zeigen:

Figur 1   eine Draufsicht auf einen neuerungsgemäßen Fahrzeugzug,

Figur 2   einen Schnitt in der Längsmittenachse durch den Fahrzeugzug von Figur 1, und

Fig.3   eine Seitenansicht des Fahrzeugzugs,bei der die Anhängerkupplung sich kurz hinter der Hinterachse des Zugfahrzeugs befindet.

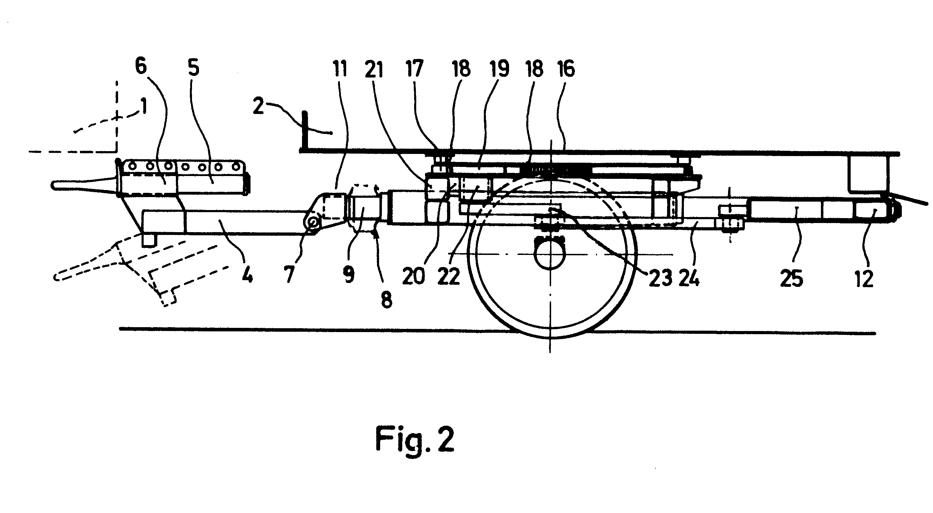

Der neuerungsgemäße Fahrzeugzug setzt sich aus einem zweiachsigen Zugfahrzeug 1 und einem ebenso zweiachsigen Anhänger 2 zusammen. Am Heck des Zugfahrzeuges ist eine handelsübliche Anhängekupplung 3 vorhanden, in die der Anhänger mit einer verkürzten Zuggabel 4 eingehängt ist. Die Zuggabel ist abgekröpft, wie dies Figur 2 zeigt. Das eigentliche Gabelende 5 besteht aus einem Zylinderrohr, das in einer Schiebehalterung 6 in verschiedenen Ausziehpositionen festgelegt werden kann, um die Zuggabel teleskopierbar zu machen.

Am freien rückwärtigen Ende ist die Zuggabel mit Hilfe horizontaler Lager 7 an einem Schieberahmen 8 angeordnet. Er verfügt über zwei parallele, zylindrische Längsholme 9 und 10, die sowohl an ihren vorderen als auch an ihren rückwärtigen Enden über Traversen 11 und 12 miteinander verbunden sind. Die Längsholme 9 und 10 sind in zylindrischen Führungen 13 und 14 am Drehgestell 15 des Anhängers verschieblich gelagert. Außerhalb der Führungen werden die Längsholme durch nicht gezeigte Faltenbälge an der Verschmutzung gehindert.

Aus Figur 2 geht der Aufbau des Drehgestells hervor. An der Unterseite des Anhängerchassis 16 ist ein handelsüblicher Drehkranz 17 angeordnet, der die Drehbeweglichkeit des Drehgestells gegenüber dem Anhängerchassis sicherstellt. Der dem Chassis zugeordnete Drehring weist an seiner Innenseite einen Innenzahnkranz 18 auf. Mit ihm kämmt ein Ritzel 19, das über einen Träger 20 am Rahmen des Drehgestells 21 befestigt ist. Der Rahmen trägt in nicht gezeigter Weise die Vorderachse des Anhängers.

Das in dem Drehlager 22 gelagerte Ritzel ist drehfest auf einer Welle angeordnet, auf der unterhalb des Lagers 22 ein Kurbelarm 23 drehsicher festgelegt ist.

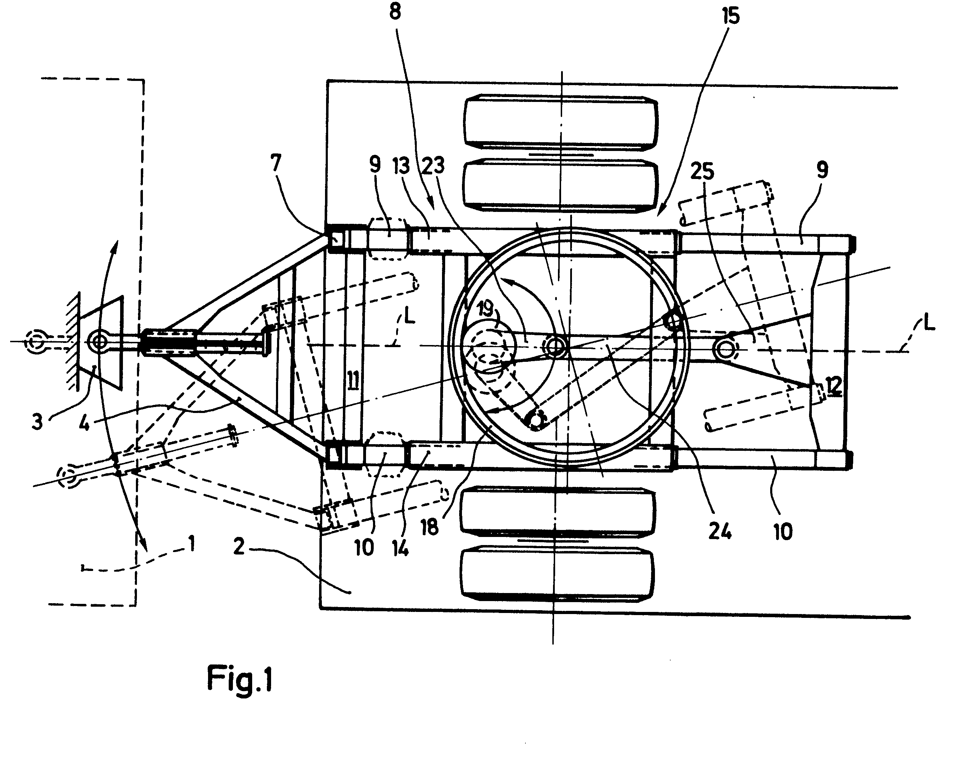

Wie Figur 1 zeigt, erstreckt sich der Kurbelarm 23 strikt nach rückwärts, wenn die Zuggabel 4 sich auf der Längsmittenachse L des Anhängers befindet, also nicht eingeschlagen ist. Am freien Ende des Kurbelarmes 23 ist ein Lenker 24 drehbeweglich angelenkt, der unterhalb des Drehgestells nach rückwärts geführt ist und dort wiederum mit einem vertikalen Drehlager mit einem Übertragungshebel 25 in Verbindung steht. Der Hebel erstreckt sich vom Drehlager nach rückwärts und ist seitensteif an der rückwärtigen Traverse 12 des Schieberahmens 8 befestigt. Er ist mittig zur Längsmittenachse L des Anhängers ausgerichtet.

Bei der gezeigten neuerungsgemäßen Anlenkung weist das Ritzel einen Durchmesser von 240 mm auf. Der Kurbelarm verfügt über eine Länge von 325 mm, der Lenker über eine solche von 800 mm und der Übertragungshebel über eine Länge von 535 mm. Figur 1 zeigt, daß bei nicht eingeschlagener Zuggabel sich der Kurbelarm 23, der Lenker 24 und der Übertragungshebel 25 sämtlich in gestreckter Ausrichtung auf der Längsmittenachse L befinden. Die Figur 1 zeigt ebenfalls die Stellung der genannten Teile bei Verschwenkung des Kurbelarmes über einen Winkelbereich von 62,5°. Die verschwenkte Position des Kurbelarmes und des Lenkers 24 ist gestrichelt in Figur 2 eingezeichnet. Die genannte Position des Kurbelarmes entspricht einem Einschlag der Zuggabel von 15°. Bei diesem Einschlag und unter Berücksichtigung der vorgenannten Abmessungen ergibt sich beim Schieberahmen ein Hub von 230 mm. Dieser Wert ist um ca. 50 % höher als der Vergleichswert der eingangs erwähnten gattungsgemäßen Lösung. Der Gesamthub bei der Neuerung entspricht der zweifachen Kurbelarmlänge; er beträgt als 650 mm. Bei der Neuerung kann die Zuggabel frei verschwenkt werden, ohne daß der Einschlagwinkel begrenzt wäre. Dies ist insbesondere für das Rangieren vorteilhaft.

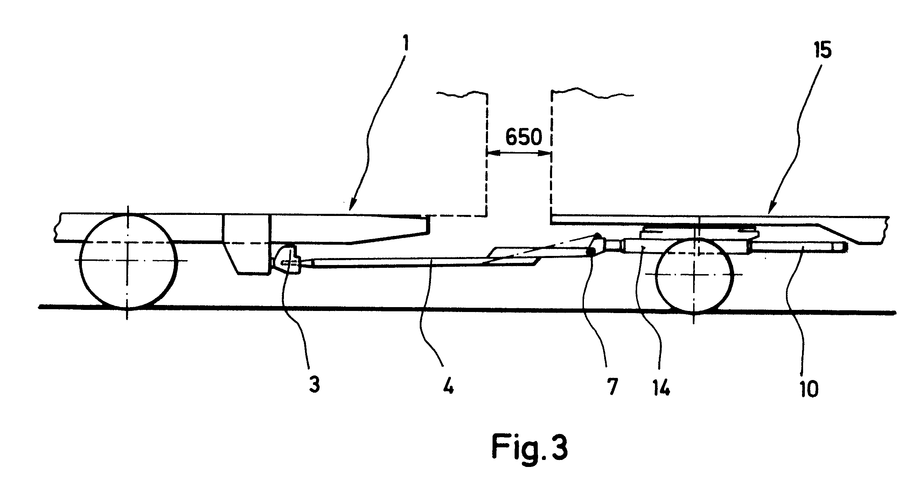

Dieses Kurz-Kuppel-System ist zuggabelunabhängig, es sind keine Spezial-Zuggabeln nötig. Die Lage der Anhängerkupplung am Motorwagen und die Länge der Zuggabel bestimmen den Abstand zwischen Motorwagen und Anhänger. Der geringste Abstand wird erreicht, wenn die Anhängerkupplung,wie in Fig.3 gezeigt, unter dem Aufbauende des Motorwagens hinter die Hinterachse des Motorwagens gelegt wird und der Anhänger mit einer längeren, serienmäßigen Zuggabel angekuppelt wird.

Bei dem gezeigten Beispiel ergibt sich ein Abstand von 650 mm zwischen Zugfahrzeug und Anhänger.

GRÜNECKER, KINKELDEY, STOCKMAIR & PARTNER

PATENTANWALTE
EUROPEAN PATENT ATTORNEYS

A GRÜNECKER. DIPL-ING
DR H KINKELDEY DIPL-ING
DR W STOCKMAIR. DIPL ING.AE E ICALTECH
DR K SCHUMANN, DIPL-PHYS
P H JAKOB DIPL-ING
DR G BEZOLD. DIPL-CHEM
W MEISTER. DIPL-ING
H HILGERS. DIPL-ING
DR H MEYER-PLATH. DIPL-ING

8000 MÜNCHEN 22
MAXIMILIANSTRASSE 58

Karl Kässbohrer
Fahrzeugwerke GmbH

7900 Ulm / Donau

EP 1963- 80/RO

K 339

---

Fahrzeugzug

---

S C H U T Z A N S P R Ü C H E

1. Fahrzeugzug mit einem wenigstens zweiachsigen Zugfahrzeug und einem mit dem Heck desselben über eine Zuggabel verbundenen, wenigstens zweiachsigen Anhänger, dessen Vorderachse ein Drehgestell mit einer in Fahrtrichtung nach vorne gerichteten Zuggabel aufweist, die an einem Schieberahmen angelenkt ist, der in Abhängigkeit vom Einschlagwinkel der Zuggabel gegenüber der Längsmittenachse des Anhängers verschiebbar im Drehgestell angeordnet ist, wobei der Schieberahmen über einen Lenker mit einem Kurbeltrieb verbunden ist, der mittels eines am Drehgestell gelagerten Ritzels in einem am Anhängerchassis befestigten, zur Drehachse des Drehgestells koaxialen Zahnkranz eingreift, dadurch g e k e n n z e i c h n e t , daß der Lenker (24) bei in der Längsmittenachse (L ) des Anhängers (2 ) befindlicher Zuggabel ( 4) vom Ende des Kurbelarmes (23) sich nach rückwärts erstreckt und an seinem freien Ende an einem sich ebenfalls nach rückwärts erstreckenden Übertragungshebel (25) angelenkt ist, der seitensteif an einer rückwärtigen Traverse des Schieberahmens befestigt ist.

2. Fahrzeugzug nach Anspruch 1, dadurch g e k e n n z e i c h n e t , daß der Lenker (24) wenigstens gleich lang ist wie der Kurbelarm (23) und maximal dessen dreifache Länge aufweist.

3. Fahrzeugzug nach Anspruch 1 oder 2, dadurch g e k e n n z e i c h n e t , daß die Länge des Übertragungshebels (25) kürzer ist als die doppelte Länge des Kurbelarmes (23).

4. Fahrzeugzug nach wenigstens einem der Ansprüche 1 bis 3, dadurch g e k e n n z e i c h n e t, daß der Übertragungshebel (24) einstückig mit der Traverse (12) ausgebildet ist.

5. Fahrzeugzug nach wenigstens einem der Ansprüche 1 bis 4, dadurch g e k e n n z e i c h n e t , daß die Traverse (12) mit dem freien rückwärtigen Ende des Schieberahmens (8) verbunden ist.

Fig.1

0168521

**Fig. 2**

Fig. 3

0168521

Europäisches
Patentamt

**EUROPÄISCHER RECHERCHENBERICHT**

0168521
Nummer der Anmeldung

EP 84 11 1082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,X | DE-U-8 304 332<br>(MASCHINENFABRIKEN BERNARD KRONE)<br>* Seite 10, Zeilen 8-23; Figuren 1, 3 * | 1,2 | B 62 D 13/02<br>B 60 D 1/14 |
| X | DE-A-3 042 141 (RANCKE)<br>* Ganzes Dokument * | 1,2 | |
| A | DE-A-3 147 543 (LA FORCE) | | |
| D,A | DE-A-3 235 546<br>(MASCHINENFABRIKEN BERNARD KRONE) | | |
| A | US-A-2 714 018 (COLPO) | | |

RECHERCHIERTE
SACHGEBIETE (Int. Cl.4)

B 62 D 13/00
B 60 D 1/00
B 62 D 53/00

Der vorliegende Recherchenbericht wurde für alle Patentansprüche erstellt.

| Recherchenort<br>BERLIN | Abschlußdatum der Recherche<br>03-10-1985 | Prüfer<br>KRIEGER P O |
|---|---|---|